# EUROPEAN PATENT APPLICATION

(11) **EP 0 665 148 A1**
(43) Date of publication of application: **02.08.1995**
(21) Application number: 95300491.8
(22) Date of filing: 26.01.1995
(51) Int. Cl.: B60T 17/04, B61G 5/08

(54) **A coupling**

(30) Priority: 26.01.1994 GB 9401471
(71) Applicant: DAVIES & METCALFE PLC, Stockport, Chesire SK6 3AE (GB)
(72) Inventor: Hesketh, Graham William, Dukinfield, Cheshire, SK16 5BQ (GB)
(74) Representative: Every, David Aidan

(57) **Abstract**

A hose-to-hose coupling assembly for an air brake pipe or a railway train has a coupling element with a fire resistant stand-by seal (18). The stand-by seal (18) is moveable in an annular groove (16) between sealing and non-sealing positions. A passageway connecting a main conduit of the coupling element to said seal is blocked by a plug (27). In the event of a fire at least part of said plug (27) is designed to melt at a predetermined temperature in order to open said passageway enabling the pressurised gas from the air brake pipe to bias said seal (18) into the sealing position. Thus when the conventional seal perishes in a fire leakage will be prevented as will application of the brakes which is undesirable when the train passes through a long distance tunnel.

## Description

This invention relates to a coupling and more particularly to a coupling element for a pressurised gas conduit of the kind used, for example, in pneumatic braking systems on railway vehicles.

In conventional pneumatic braking systems on a railway vehicle, if leakage above a predetermined level occurs from a brake pipe the emergency brakes are automatically applied to provide a fail-safe mechanism.

It is increasingly prevalent for railway trains to be used in long distance tunnels for example in the Channel Tunnel between France and the United Kingdom and accordingly a different safety criteria must be applied. The prime consideration for safety is that a train should not be allowed to fail in a manner which causes it to stop in a tunnel. This is particularly important when the failure is caused by the effects of a fire. The consequences of a train full of passengers becoming irrecoverably stranded inside a tunnel with the effects of fire, smoke and toxic fumes are obviously unacceptable.

In the event of a fire conventional seals along an air pipe are likely to disintegrate and in the case of the air brake pipe this will result in a leakage of air pressure and consequential application of the brakes. One such seal is present on a hose-to-hose coupling which connects the air brake pipes of adjacent train carriages.

Known types of fire resistant hose-to-hose couplings merely comprise a standard coupling fitted with a muff or sleeve made from a fire resistant material. These coupling designs have proved difficult to maintain and assemble or disassemble quickly as the sleeve first has to be removed from the coupling.

It is accordingly an object of the present invention provide a coupling element which has a fire resistant sealing arrangement and which obviates or mitigates the aforesaid disadvantage.

According to the present invention there is provided a coupling element for a pressurised gas conduit, the element comprising a coupling body having a main gas conduit, a first seal manufactured from a material having a melting or disintegrating temperature above a predetermined value and moveable between sealing and non-sealing positions, a passageway connecting said main conduit to said first seal, and a plug blocking said passageway and manufactured at least in part from a material with a melting or disintegrating temperature below said predetermined value, wherein at said predetermined temperature value at least said part of said plug melts or disintegrates to open said passageway enabling the pressurised gas to bias said seal into said sealing position.

Thus in the event of a fire when said predetermined temperature is likely to be reached, the first seal will automatically be moved into an operational position.

Conveniently the first seal has opposed surfaces of different area so that when the pressurised air acts on each surface a greater force is applied to one of the surfaces and the seal will be moved to the sealing position.

The first seal may be annular and may have a peripheral compression ring.

Preferably the coupling body has a mating surface with a groove in which said first seal is received.

Preferably the plug has an inner core which is meltable or disintegrable at said predetermined temperature and an outer part which remains solid at said predetermined temperature. The outer part of said plug may conveniently have a screw thread to enable it to be screwed into said passageway.

In the coupling a elastomeric second seal may be provided, the second seal being perishable at a temperature above said predetermined value, but below the melting or disintegration temperature of said first seal.

According to a second aspect of the present invention there is provided a hose-to-hose coupling assembly comprising at least one coupling element as defined above.

A specific embodiment of the present invention will now be described, by way of example only, with reference to the accompanying drawings in which:
Figure 1 is a diagrammatic representation of part of an air supply system of a railway vehicle for coupling to an adjacent vehicle;
Figure 2 is a sectioned side view of a coupling assembly of the present invention;
Figure 3 is an enlarged view of a plug of the coupling assembly of figure 2; and
Figure 4 is an enlarged view of a seal of the coupling assembly of figure 2.

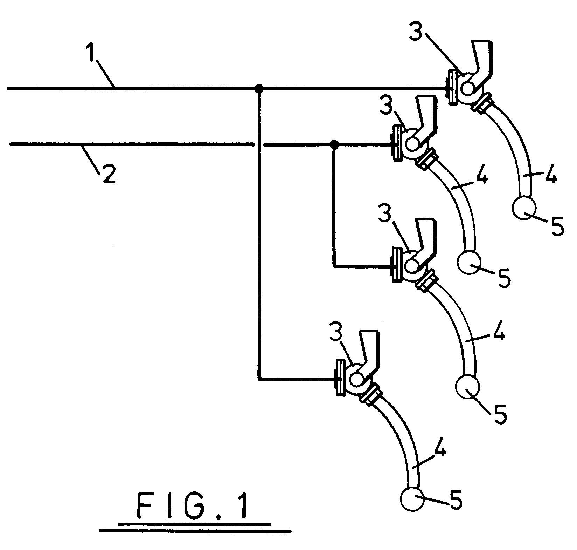

Referring to figure 1 of the drawings, there is shown an arrangement which is present at each end of air supply pipes on a railway vehicle such as a carriage.

Two air supply pipes which run the length of the railway vehicle are shown: a main reservoir pipe 1 and an air brake pipe 2. The main reservoir pipe 1 carries pressurised air from a main reservoir (not shown) to facilities in each carriage e.g. toilet flushes, automatic doors and air conditioning etc. The air brake pipe 2 carries pressurised air to a distributor (not shown) which controls the brake application on each carriage as is well known. At each end of the carriage the air pipes are bi-furcated and each branch pipe has an end cock 3 which connects the pipe to a flexible coupling hose 4. The flexible hose 4 present at each carriage end is connected to a corresponding hose on the adjacent carriage by means of a hose-to-hose coupling assembly comprising mating coupling heads 5 (only one shown in figure 1).

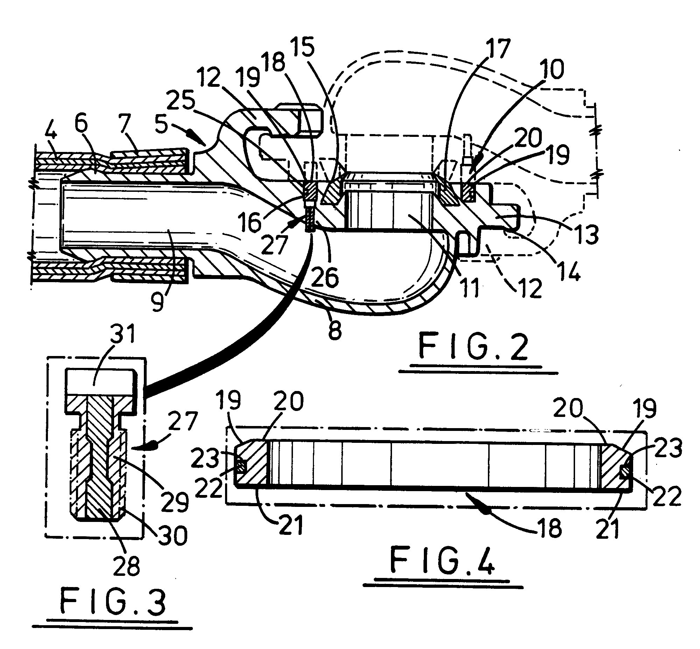

A hose-to-hose coupling assembly is shown in detail in figure 2 and for clarity one coupling head 5 is shown in solid line, the other being shown in dotted line. An end spigot 6 of each coupling head 5 is connected to the hose 4 by means of a conventional fastening collar 7.

The coupling head 5 has a metallic main body 8 traversed by a central conduit 9, and a substantially flat mating surface 10. A central circular aperture 11 in the mating surface 10 communicates with the central conduit 9. At one end of the mating surface 10 a locating thumb 12 overhangs and at the other end there is a radially outward extending flange 13 with a peripheral lip 14. The mating surface 10 has two concentric annular grooves 15,16: an inner groove 15 houses a annular conventional rubber seal 17 which stands proud of the mating surface 10; and an outer groove 16 which receives an annular stand-by seal 18 manufactured from metal (typically brass). The stand-by seal 18 has a tapered upper periphery 19 so that its upper surface 20, which is substantially co-terminus with the mating surface 10, has a smaller surface area compared to its lower surface 21. The area differential is typically 2.3:1. A compression ring 22 is received in a groove 23 formed in the peripheral surface 24 of the stand-by seal 18, and bears against an outer wall 25 of the outer annular groove 16. The lower surface 21 of the stand-by seal 18 is connected to the main conduit 9 by a small bore 26 which is filled by a plug 27.

The plug 27 is shown in detail in figure 3 and comprises an inner core 28 manufactured from a low melting point alloy moulded into an outer shell 29 of stainless steel. The shell 29 has a screw thread 30 which mates with a thread formed on the small bore 26. A screwdriver slot 31 is formed on the upper surface of the plug 27 to allow in to be screwed into place in the bore 26.

The provision of the screwdriver slot 31 and the screw thread 30 on the outer shell 29 permits easy inspection and replacement of the plug 27.

The coupling head 5 is designed to connect to an identical or similar coupling head of an adjacent hose. When the heads 5 are connected together the conventional seals 17 are compressed into their respective inner grooves 15 and the thumb 12 of each coupling head 5 passes over the flange 13 and locates over the peripheral lip 15 to hold fast the connection.

Under normal operation pressurised air from the air brake pipe passes through the end cock 3, down the coupling hose 4, through the main conduit 9 and central aperture 11 of one coupling head 5 and through the adjacent coupling head 5, hose 4 and into the adjacent brake pipe. The same passage is followed by the pressurised air in the coupled main reservoir pipes of adjacent vehicles. The conventional seals 17 prevent air leaking from the couplings.

In the event of a fire the conventional rubber seal 17 will disintegrate and the stand-by seal 18 comes into effect in a manner described below to prevent unacceptable levels of leakage and consequential brake application.

The stand-by seal 18 only comes into operation in the event of the coupling being subjected to abnormally high temperatures such as those that occur in a fire. At a predetermined temperature level the alloy core 28 of the plug 27 melts thereby exposing the lower surface 21 of the seal 18 to the pressurised air in the main conduit 9. As a result of the area differential between the upper and lower surfaces 20,21 of the stand-by seal 18, application of equal air pressure to both surfaces 20,21 of the seal 18 will bias it axially upwards out of the groove 16 and against the adjacent coupling head 5. The biased stand-by seal 18 will bear against either a corresponding stand-by seal 18 of an identical coupling 5 or the mating surface 10 of a conventional coupling head and in both cases an effective metal-to-metal seal is formed.

The stand-by seal 18 acts so that the level of pressure leakage is kept down to a rate whereby the combined leakage from the four individual coupling heads 5 on each carriage end is still substantially less than the air pressure being supplied by the respective air pipes 1,2. Prevention of the brake application allows the railway vehicle to be recovered from the tunnel.

In the case of the main reservoir pipe 1, significant leakage is avoided to enable the facilities to remain in a working condition.

The stand-by seal arrangement obviates the need for a fire-resistant muff or sleeve and allows the coupling assembly to be maintained with ease and assembled or disassembled quickly.

## Claims

1. A coupling element for a pressurised gas conduit, the element comprising a coupling body having a main gas conduit, a first seal manufactured from a material having a melting or disintegrating temperature above a predetermined value and moveable between sealing and non-sealing positions, a passageway connecting said main conduit to said first seal, and a plug blocking said passageway and manufactured at least in part from a material with a melting or disintegrating temperature below said predetermined value, wherein at said predetermined temperature value at least said part of said plug melts or disintegrates to open said passageway enabling the pressurised gas to bias said seal into said sealing position.

2. A coupling element according to claim 1, wherein the first seal has opposed surfaces of different area.

3. A coupling element according to claim 1 or 2, wherein the first seal is annular and has a peripheral compression ring.

4. A coupling element according to any one of claims 1 to 3, wherein the coupling body has a mating surface with a groove in which said first seal is received.

5. A coupling element according to any one of claims 1 to 4, wherein the plug has an inner core which is meltable at said predetermined temperature value and an outer part which remains solid at said predetermined value.

6. A coupling element according to claim 5, wherein the outer part of said plug has a screw thread to enable it to be screwed into said passageway.

7. A coupling element according to any preceding claim, wherein an elastomeric second seal is provided, the second seal being perishable at a temperature above said predetermined value, but below the melting or disintegration temperature value of said first seal.

8. A hose-to-hose coupling assembly comprising at least one coupling element as defined in any one of claims 1 to 7.

9. A coupling element substantially as hereinbefore described with reference to the accompanying drawings.

10. A hose-to-hose coupling assembly substantially as hereinbefore described with reference to the accompanying drawings.
